# EUROPEAN PATENT SPECIFICATION

(11) **EP 0 617 667 B1**
(45) Date of publication and mention of the grant of the patent: **24.07.1996**
(21) Application number: 93901361.1
(22) Date of filing: 09.12.1992
(51) Int. Cl.: B32B 27/32, C08L 23/10, C09J 123/16

(54) **HEAT SEALABLE POLYOLEFIN FILMS CONTAINING VERY LOW DENSITY ETHYLENE COPOLYMERS**
HEISSSIEGELBARE POLYOLEFINFILME ENTHALTEND POLYETHYLENKOPOLYMERE MIT SEHR NIEDRIGER DICHTE
PELLICULES THERMOSCELLABLES DE POLYOLEFINE CONTENANT DES COPOLYMERES D'ETHYLENE A TRES FAIBLE DENSITE

(30) Priority: 19.12.1991 US 810473
(43) Date of publication of application: 05.10.1994
(73) Proprietor: EXXON CHEMICAL PATENTS INC., Baytown, TX 77522 (US)
(72) Inventor: HODGSON, William, John, Jr., Baytown, TX 77520 (US)
(74) Representative: Veldhuizen, Albert Dirk Willem
(86) International application number: PCT/US92/10618
(87) International publication number: WO 93/11940

(56) References cited:
- EP-A- 0 129 368
- EP-A- 0 144 999
- EP-A- 0 247 897
- EP-A- 0 474 376
- WO-A-92/14784
- US-A- 4 837 084

## Description

### FIELD OF THE INVENTION

This invention relates to a laminar polyolefin film having a base layer and at least one heat sealable layer present on one or both surfaces of the base layer. More specifically, the film has a base layer comprising a blend of an olefin polymer and a very low density ethylene/alpha monoolefin copolymer and a heat sealable layer comprising a very low density copolymer of ethylene and a different alpha monoolefin.

### BACKGROUND OF THE INVENTION

Films based on polyolefin polymers and copolymers are widely used in packaging applications which require sealing of the film to itself as the package is formed and/or filled. This sealing may be accomplished using adhesives such as low density polyethylene or ethylene/vinyl acetate copolymers. When heat sealing is used, it is important that the thermoplastic film be readily heat sealable while also maintaining other physical and mechanical properties such as resistance to tearing, tensile strength and processability in high speed packaging equipment.

In form/fill packaging operations, film is generally first processed into a bag, a bottom being formed by squeezing together two films, and subjecting the bottom to a temperature above the seal initiation temperature under pressure to seal the bottom of the bag. The bag is subsequently filled with the goods to be packaged, and the top is then sealed in a similar fashion.

Film heat sealing is generally effected by means of heated flat surfaces, between which film surfaces are forcefully pressed together at a temperature above the seal initiation temperature of the film. When use is made of equipment such as vertical form, fill and seal machines, the bag is filled with the contents to be packaged while the bottom seal is still hot. Cooling the seal would entail too long a waiting time, thus lengthening the cycle time and increasing operating costs. Consequently, the film must be one which enables the formation of a strong seal even as the seal formed is at or near the seal formation temperature, i.e., it must have good hot tack seal strength.

There are several other desirable characteristics of a heat sealable film which enable trouble free performance in form fill and seal applications. First the film should provide strong seals at a low temperature to minimize energy requirements. Additionally, the film should allow for strong seals over a broad temperature range so that the film is more forgiving of heat sealing equipment adjustments and inadequacies. Further, the film should enable the development of seal strength almost immediately (before cooling) so that the seal bears and secures the weight of the wrapped product.

Many commonly used plastic materials which are used in the formation of film products could benefit from an improvement of their heat sealing characteristics. For example, crystalline polyolefin films such as polypropylene films have found extensive use in the field of packaging. Polypropylene films, in both oriented or non-oriented form, are used widely in packaging applications because of their superiority in mechanical properties such as tensile strength, rigidity, surface hardness, and optical properties such as gloss and transparency, and in food hygiene properties such as freedom from toxicity and odor. However, polypropylene and other crystalline polyolefin films typically require heat sealing initiation temperatures upwards of about 120°C before adequate film seal strengths (at least 78.7 g/cm (200 g/inch), desirably 157.5 g/cm (400 g/inch) and higher per specified settings for pressure and dwell time) are obtained. Consequently, there has been considerable development work to find ways that would allow the heat sealing of polypropylene films at lower temperatures and provide good hot tack seal strength. Such approaches have included the use of coatings, blend components and multiple film layers.

EP-A-0 221 726 discloses a film laminate prepared by coextruding a base layer which may be a polyolefin, particularly polypropylene or mixtures of polyolefins, and a heat seal layer which may be a very low density polyethylene (VLDPE) or a blend thereof with another polyolefin. The publication also indicates that scrap film may be recycled which could lead to structures where the base layer would comprise a blend of polypropylene and VLDPE. The VLDPE is described as having a density of 0.890 to 0.912 g/cc and a melt index of generally 0.8 g/10 minutes or less, and is said to be of low crystallinity and produced in a low pressure process.

EP-A-0 247 897 discloses a film laminate comprising a base layer which may contain polypropylene and at least one heat-sealable film layer which may be based on a very low density copolymer of ethylene and an alpha-monoolefin such as octene-1.

US-A-4,764,404 discloses a multi layer package film having adhered to one side of a base layer (aluminum, polyamide or vinylidene chloride sheet) a composition comprising a blend of polypropylene (40-70% by weight), a second component which may be a copolymer of ethylene and a different alpha olefin (5-35% by weight) and a third elastomeric olefin polymer or copolymer (10-40% by weight). The second component may be ethylene-based copolymers available from Mitsui Petrochemical Company Limited under the designations "TAFMER" A or P.

EP-A-0 341 091 discloses that certain linear low density ethylene copolymers made in accordance with US-A-4,612,300 using a Ziegler-Natta magnesium halide supported catalyst have good heat seal properties for packaging applications. These copolymers Amy contain 7-40 wt% of a C₅ to C₁₂ α-olefin and exhibit a density of 0.87 to 0.915.

US-A-4,837,084 discloses a heat schrinkable film having at least one layer of a VLDPE formed by a copolymer of ethylene and an α-olefin with six or more carbon atoms per molecule which has a density of less than 0.910 and a melt index of 2 or less. There is no disclosure of a molecular weight distribution of less than 3.5 or a compositions distribution breadth index of over 70%.

EP-A-144999 discloses a curl-resistant a multilayer film having an inner layer of a polypropylene based resin or a composition thereof with an ethylene α-olefin copolymer having a density of from 0.850 to 0.945 and an outer heat-sealable layer of a linear ethylene α-olefin copolymer having a density of from 0.900 to 0.945. The outer copolymer is not disclosed to have a molecular weight distribution of less than 3.5 or a compositional distribution breadth index of greater than 70%.

WO 93/03093 (published 18.02.93; EP-A-0594777 falling under Article 54(3)EPC) discloses a multilayer blend including a heat seal layer of narrow compositional distribution breadth index; however base layers comprising blends of high and low density olefin derived polymers are not described.

US-A-4,291,092; 4,339,496; 4,340,640 and 4,340,641, all disclose a heat sealable packaging film layer for a polypropylene substrate wherein the film layer comprises a blend of a copolymer of ethylene and a higher olefin and a copolymer of propylene and a higher olefin.

The prior art heat sealable films are not without certain deficiencies. A need still exists in the industry for a heat sealable layer having a seal initiation temperature of about 110°C (225°C) or lower while the film maintains good elevated temperature hot tack properties, abrasion resistance, blocking resistance, good strength and abrasion resistance, blocking resistance, good strength and rigidity, and good film optical properties.

A class of highly active olefin catalysts known as single site catalysts or metallocenes is well known especially in the preparation of polyethylene and ethylene copolymers. These catalysts, particularly those based on group IVB transition metals such as zirconium, titanium and hafnium, show extremely high activity in ethylene polymerisation. The metallocene catalysts are also highly flexible in that, by manipulation of catalyst substituents, catalyst composition and reaction conditions, they can be made to provide polyolefins with controllable molecular weights from as low as about 200(useful in applications such as lube oil additives) to about 1 million or higher as, for example, ultra high molecular weight linear polyethylene. At the same time, the molecular weight distribution of the polymers can be controlled from extremely narrow (as in a polydispersity, M_{w}/Mₙ of about 2), to broad (a polydispersity of about 8).

Teachings on these metallocene catalysts for the polymerisation of ethylene is found in EP-A-0129368 and US-A-4,937,299. The metallocene catalyst may be used with an activator such as an alumoxane which is formed when water reacts with trialkyl aluminum with the release of methane, which alumoxane complexes with the metallocene compound to form the catalyst; or with other types of activators well known in the catalytic art. See for example EP-A-0 277 003 and EP-A-0 277 004 both published August 3, 1988. These publications describe ionic activators, which ionize the metallocene on contact, forming a metallocene cation associated with, but not coordinated or only loosely coordinated to the remaining ion of the ionizing compound. Further, useful to produce polymers in polymerization process are the metallocene catalyst components and catalyst systems described in US-A-5,055,438, 5,057,475 and 5,096,867, EP-A-0 420 436 and WO91/04257. These references relate to the metallocene catalyst component being a monocylopentadienyl heteroatom containing compound, which can be activated by the alumoxane or the ionic compound described above.

There are a number of structural variables in polyolefins which affect the ultimate properties of the polymer. Two of the most important are composition distribution (CD) and molecular weight distribution (MWD). Composition distribution (CD) refers to the distribution of comonomer between copolymer molecules. This feature relates directly to polymer crystallizability, optical properties, toughness and many other important use characteristics. Molecular weight distribution (MWD) plays a significant role in melt processability as well as the level and balance of physical properties achievable. Molecular weight (MW) determines the level of melt viscosity and the ultimately desired physical properties of the polymer. The type and amount of comonomer affects the physical properties and crystallizability of the copolymer. All of these structural features (MW, MWD, CD, comonomer type and amount) are readily controllable through the use of metallocene catalysts as discussed in EP-A-0 129 368 and US-A- 4,937,299.

Metallocene catalyst are particularly attractive in making tailored uniform and specialty copolymers. For example, if a lower density ethylene copolymer is made with a metallocene catalyst, such as very low density polyethylene (VLDPE), a uniform copolymerization will occur, as contrasted with the polymer produced by copolymerization using conventional Ziegler Natta catalysts.

### SUMMARY OF THE INVENTION

The invention provides laminar polyolefin film materials having a base film layer comprising a blend of an olefin polymer and from 1 to 30% by weight of at least one very low density copolymer of ethylene and a C₃ to C₂₀ alpha nonoolefin comonomer copolymerizable with ethylene, the base layer having a heat sealable film layer present on one or both surfaces thereof comprising a very low density copolymer of ethylene and a copolymerizable C₃ to C₂₀ alpha olefin comonomer, the film further characterized in that the ethylene/alpha monoolefin copolymer present in one of said layers is a copolymer of ethylene and a C₆ to C₁₀ alpha monoolefin which alpha monoolefin differs from the alpha monoolefin present in the ethylene copolymer of the other layers. The ethylene copolymer constituents of the film are characterized as having a density in the range of 0.88 g/cm³ to 0.915 g/cm³, a melt index in the range of 0.5 dg/min to 7.5 dg/min, a molecular weight distribution (M_{w}/Mₙ) no greater than 3.5 preferably from 1.5 to 3.5 with, preferably, an essentially single melting point in the range of 60°C to 115°C, measured as a DSC peak Tₘ.

Films of this invention exhibit extremely good hot tack seal strength at temperatures in the range of from 93.3°C to 143.3°C (200 to 290°F) thereby rendering them extremely useful as packaging materials in high speed packaging operations.

### BRIEF DESCRIPTION OF THE DRAWINGS

The foregoing aspects, features, and advantages of the invention will become clearer and more fully understood when the following detailed description is read in conjunction with the accompanying drawings, in which:

FIG. 1 is a graph of the solubility distribution and composition distribution of a copolymer (X) having a narrow SDBI and CDBI and copolymer (Y) having a broad SDBI and CDBI.

FIG. 2 is a graph illustrating the correlation between dissolution temperature and composition used to convert the temperature scale to a composition scale.

FIG. 3 is a graph illustrating the method for calculating CDBI.

### DETAILED DESCRIPTION OF THE INVENTION

The polyolefin component of the base (or core) material of the film of this invention is preferably selected from the group consisting of polypropylene, low density polyethylene, linear low density polyethylene, polybutene, random copolymers of propylene with up to about 15 mole % of a C₂ or C₄ to C₁₂ alpha olefin as well as blends of two or more of these materials. The polyolefins which may be used as the major component in the base layer are distinguished from the VLDPE copolymers also contained in the film in that the former exhibit a density in excess of 0.915 g/cm³.

The preferred polyolefin component of the base layer is crystalline polypropylene or random copolymers of propylene and another alpha olefin. Where random propylene copolymers are used as the base layer, the content of propylene is preferably in the range of from 88 to 99 mole percent, based on total moles, more preferably in the range of 90 mole percent to 94 mole percent. The preferred random copolymers consist of propylene copolymerized with 1 to 10 mole percent of ethylene.

The VLDPE's which may be used as the copolymer component of the base or sealing layers of the film of this invention are ethylene/alpha-monoolefin copolymers wherein the monoolefin can have from 3-20 carbon atoms such as ethylene/butene-1, ethylene/hexene-1, ethylene/octene-1, and ethylene/propylene copolymers. These ethylene copolymers with prescribed range of comonomer levels can be prepared by polymerization of the suitable olefins in the presence of supported or unsupported single site catalysts systems. The preferred range of comonomer level generally ranges from 4 to 15 mole percent.

The preferred single site catalyst systems preferably used to produce the copolymers employed in films of the invention are those wherein a transition metal compound is activated with an activator preferably the transition metal compound is of the formula (LS)ZX₁X₂ wherein Z is a group 3 to 10 transition metal, X₁ is an anionic leaving group ligand or a non-coordination anion leaving group, X₂ is a hydride or hydrocarbyl ligand, and (LS) is a ligand system which completes the coordination number of Z. Preferably the ligand system coordinated to the transition metal (i) two cyclopentadienyl ligands, each optionally substituted and the two optionally being bridged with a bridging atom or group or (ii) a single, optionally substituted, cyclopentadienyl ligand and a heteroatom - containing ligand, the two ligands optionally being bridged with a bridging atom or group. Representative examples of such compounds may be found for example in EP-A-0 129 368 and EP-A-0 420 436.

The activator preferably employed is an aluminum compound such as an alumoxane; or a non-coordinating anion precursor such as described in EP-A-0 277 003 and EP-A-0 277 004.

The low melting polymer ingredient utilized in the base layer and heat seal layer of the film of the present invention has a density in the range of 0.88 g/cm³ to 0.915 g/cm³. Preferably the density is in the range of 0.89 g/cm³ to 0.91 g/cm³. Densities above 0.90 g/cm³ are measured using standard accepted procedures. At densities below 0.90 g/cm³, the samples are additionally conditioned by holding them for 48 hours at ambient temperature (23°C), prior to density measurement.

The melt index (MI) of the ethylene/alpha-monoolefin copolymers of the present invention is in the range of 0.5 dg/min to 7.5 dg/min. Preferably the MI is in the range of 0.5 dg/min to 5.0 dg/min, and the most preferred MI is in the range of 1.0 to 2.5 dg/min. MI as measured herein is determined according to ASTM D-1238 (190/2.16). High load MI is determined according to ASTM D-1238 (190/21.6). These copolymers also have a narrow molecular weight distribution. The ratio of M_{w}/Mₙ in the range of 2.0 to 3.0 is especially preferred.

The ethylene/alpha-monoolefin copolymers preferably have an essentially single melting point characteristic with a peak melting point (Tₘ) as determined by Differential Scanning Colorimetry (DSC) in the range of 60°C to 115°C. More preferably the DSC peak Tₘ is in the range of about 80°C to about 100°C. "Essentially single melting point" as used herein means that at least about 80% by weight of the material corresponds to a single Tₘ peak existing in the range of 60-115°C, and there is essentially absent from the polymer any substantial fraction of material which corresponds to a Tₘ peak found at a temperature higher than 115°C, i.e., "essentially" the bulk material content of the polymer corresponds to a "single" melting point peak in the 60-115°C range, and "essentially" no substantial fraction of the material has a peak melting point in excess of 115°C, as determined by DSC analysis.

DSC measurements are made on a Perkin Elmer System 7 Thermal Analysis System. Melting information reported are second melting data i.e. the sample in heated at a programmed rate of 10°C/min to a temperature above its melting range. The sample is then cooled at a programmed rate of 10°C/min to a temperature below its crystallization range. The sample is then reheated (2nd melting) at a programmed rate of 10°C/min.

The presence of higher melting peaks is detrimental to film properties such as haze, and compromises the chances for meaningful reduction in the seal initiation temperature of the final film.

The composition distribution breadth index (CDBI) of such VLDPE copolymers will generally be in the range of 70 percent or higher. The CDBI is defined as the weight percent of the copolymer molecules having a comonomer content within 50 percent (i.e. ±50%) of the median total molar comonomer content. The CDBI of linear polyethylene, which does not contain a comonomer, is defined to be 100%.

The Composition Distribution Breadth Index (CDBI) is determined via the technique of Temperature Rising Elution Fractionation (TREF). CDBI determination clearly distinguishes the VLDPE copolymers of this invention (narrow composition distribution as assessed by CDBI values generally above 70%) from VLDPE's available commercially today which generally have a broad composition distribution as assessed by CDBI values generally less than 55%. The benefits to the subject invention accrue through the specific use of VLDPE's of narrow composition distribution. The CDBI of a copolymer is readily calculated from data obtained from techniques known in the art, such as, for example, temperature rising elution fractionation as described, for example, Wild et al., J. Poly. Sci, Poly, Phys, Ed., Vol.. 20, p. 441 (1982) and US-A-5,008,204.
Solubility Distribution is measured using a column of length 164 cm and 1.8 cm ID (inner diameter) is packed with non-porous glass beads 840 to 590 micrometer (20-30 mesh) and immersed in a temperature programmable oil bath. The bath is stirred very vigorously to minimize temperature gradients within the bath, and the bath temperature is measured using a platinum resistance thermometer. About 1.6 g of polymer is placed in a sample preparation chamber and repeatedly evacuated and filled with nitrogen to remove oxygen from the system. A metered volume of tetrachlorethylene solvent is then pumped into the sample preparation chamber, where it is stirred and heated under 3.03 bar (3 atmospheres) pressure at 140°C to obtain a polymer solution of about 1 percent concentration. A metered volume of this solution, 100 ml is then pumped into the packed column thermostated at a high temperature,120°C.

The polymer solution in the column is subsequently crystallized by cooling the column to 0°C at a cooling rate of ^{∼}20°C/min. The column temperature is then maintained at this temperature for 25 min. at 0°C. The elution stage is then begun by pumping pure solvent, preheated to the temperature of the oil bath, through the column at a flow rate of 27 cc/min. Effluent from the column passes through a heated line to an IR detector which is used to measure the absorbance of the effluent stream. The absorbance of the polymer carbon-hydrogen stretching bands at about 2960 cm⁻¹ serves as a continuous measure of the relative weight percent concentration of polymer in the effluent. After passing through the infrared detector the temperature of the effluent is reduced to about 110°C, and the pressure is reduced to atmospheric pressure before passing the effluent stream into an automatic fraction collector. Fractions are collected in 3°C intervals. In the elution stage pure tetrachlorethylene solvent is pumped through the column at 0°C at 27 cc/min. for 25 min. This flushes polymer that has not crystallized during the cooling stage out of the column so that the percent of uncrystallized polymer (i.e. the percent of polymer soluble at 0°C) can be determined from the infrared trace. The temperature is then programmed upward at a rate of 1.0°C/min. to 120°C. A solubility distribution curve, i.e. a plot of weight fraction of polymer solubilized as a function of temperature, is thus obtained.

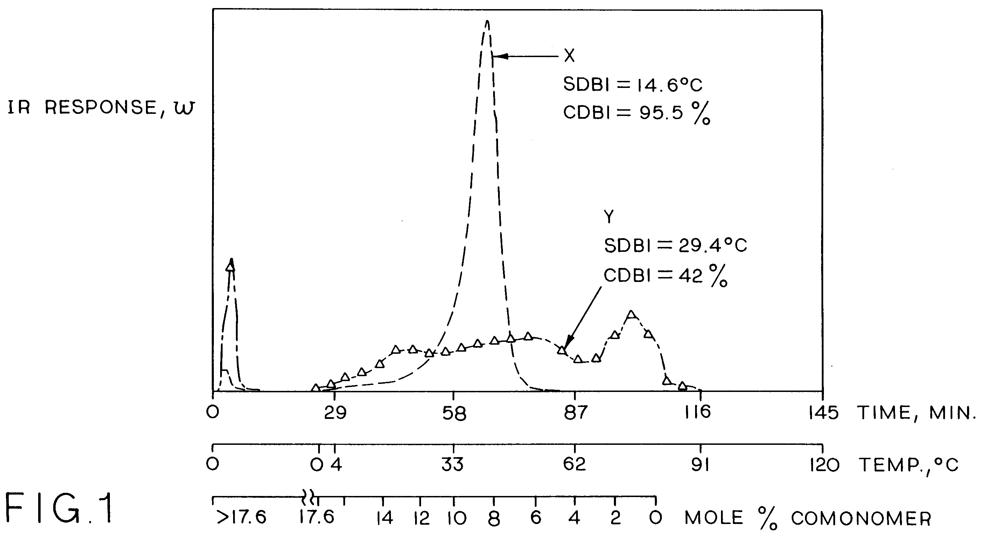

The procedure for calculating the Solubility Distribution Breadth Index (SDBI) is set forth below. Solubility distributions of two ethylene interpolymers are shown in FIG. 1. Here, for illustration purposes only, Sample X has a narrow solubility distribution and elutes over a narrow temperature range compared to Sample Y, which has a broad solubility distribution. A solubility distribution breadth index (SDBI) is used as a measure of the breadth of the solubility distribution curve. Let *w*(T) be the weight fraction of polymer eluting (dissolving) at temperature T. The average dissolution temperature, T ₐᵥₑ, is given by${\text{T}}_{\text{ave}} \text{= T} \text{w} \text{(T)dT, where} \text{w} \text{(T)dT = 1.}$

SDBI is calculated using the relation:${\text{SDBI(°C) = [(T - T}}_{\text{ave}} {\text{)}}^{\text{4}} \text{w} {\text{(T)dT]}}^{\text{1/4}}$ (SDBI is thus analogous to the standard deviation of the solubility distribution curve, but it involves the fourth power rather than the second power to T - Tₐᵥₑ). Thus, for example, the narrow solubility distribution Sample X and the broad solubility distribution Sample Y in FIG. 1 have SDBI values equal to 14.6°C and 29.4°C, respectively. The preferred values of SDBI are less than 28°C and more preferred less than 25°C and even more preferred less than 20°C.

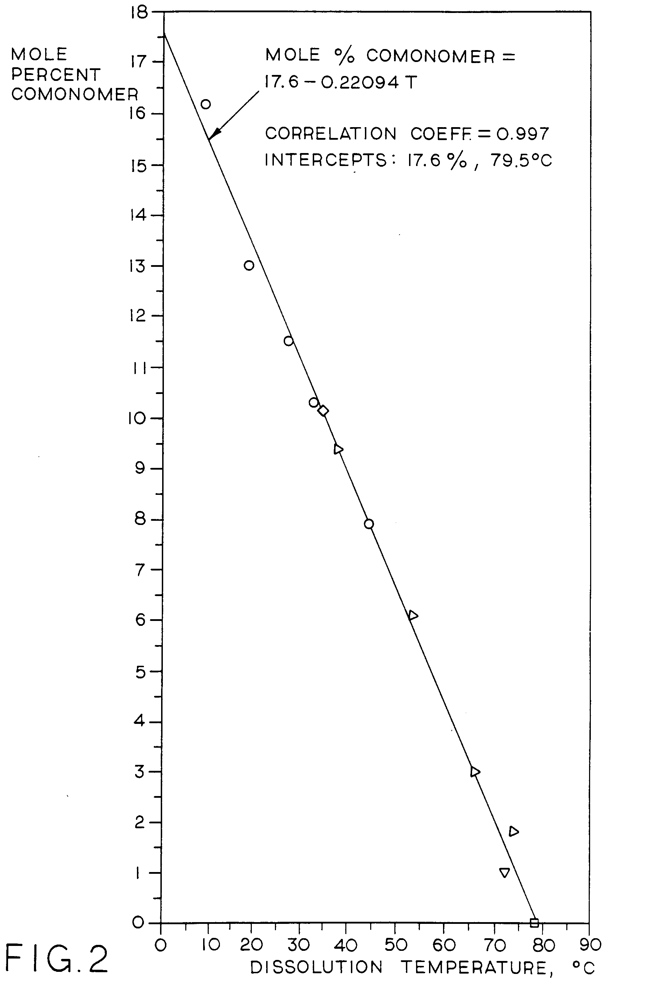

The composition distribution (CD) of a crystalline interpolymer is determined as follows. The composition and number average molecular weight, Mₙ, of fractions collected in various narrow temperature intervals for several poly(ethylene-co-butene)'s was determined by C13 NMR and size exclusion chromatography, respectively. FIG. 2 is a plot of mole percent comonomer vs. elution temperature for fractions having Mₙ > 15,000. The curve drawn through the data points is used to correlate composition with elution temperature for temperatures greater than 0°C. The correlation between elution temperature and composition becomes less accurate as the Mₙ of a fraction decreases below 15,000. Such errors can be eliminated by direct measurement of the composition of effluent fractions by C13 NMR. Alternatively, the elution temperature-composition calibration for high molecular weight fractions given in FIG. 2 may be corrected based on the Mₙ of effluent fractions and an experimentally established correlation between Mₙ and elution temperature that applies for Mₙ < 15,000. However, it is assumed that such low molecular weight molecules are present to a negligible extent and that any errors caused are negligible. A correlation curve such as the one in FIG. 2 is applicable to any essentially random poly(ethylene-co-α -olefin) provided, however, that the α-olefin is not propylene.

The temperature scale of a solubility distribution plot can thus be transformed to a composition scale, yielding a weight fraction of polymer versus composition curve. As seen from the composition scale in FIG. 2, Sample X contains molecules spanning a narrow composition range, whereas Sample Y contains molecules spanning a wide composition range. Thus, sample X has a narrow composition distribution whereas Sample Y has a broad composition distribution.

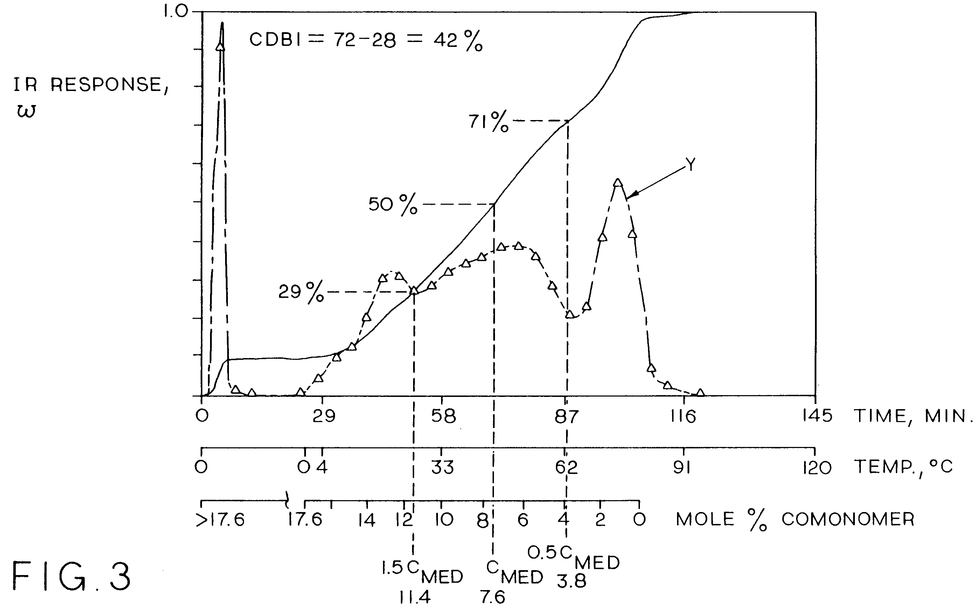

A quantitative measure of the breadth of the composition distribution is provided by the Composition Distribution Breadth Index (CDBI). CDBI is defined to be the percent of polymer whose composition is within 50% of the median comonomer composition. It is calculated from the composition distribution curve and the normalized cumulative integral of the composition distribution curve, as illustrated in FIG. 3. The median composition, C_{med}, corresponds to the composition at the point where the cumulative integral equals 0.5. The difference between the values of the cumulative integral at compositions 0.5 C_{med} and 1.5 C_{med} (71 - 29, or 42%, in this example) is the CDBI of the copolymer. CDBI values fall between zero and one, with large values indicating narrow CD and low values indicating broad CD. Thus, now referring back to Figure 1, the narrow and broad CD copolymers have CDBI's equal to 95.5% and 42%, respectively. It is difficult to measure the CD and CDBI of copolymers having very low comonomer content with high accuracy so the CDBI of polyethylenes with densities greater than 0.94 g/cm³ is defined to be equal to 100%.
Unless otherwise indicated, terms such as "comonomer content", "average comonomer content" and the like refer to the bulk comonomer content of the indicated copolymer.

Utilizing a metallocene catalyst, the VLDPE copolymers useful as the low melting polymers of the present invention can be produced in accordance with any suitable polymerization process, including a slurry polymerization, gas phase polymerization, and high pressure polymerization process.

A slurry polymerization process generally uses super-atmospheric pressures and temperatures in the range of 40-100°C. In a slurry polymerization, a suspension of solid, particulate polymer is formed in a liquid polymerization medium to which ethylene and comonomers and often hydrogen along with catalyst are added. The liquid employed in the polymerization medium can be an alkane, cycloalkane, or an aromatic hydrocarbon such as toluene, ethylbenzene or xylene. The medium employed should be liquid under the conditions of polymerization and relatively inert. Preferably, hexane or toluene is employed.

Alternatively, the VLDPE copolymer components of the present invention may be formed by gas-phase polymerization. A gas-phase process utilizes super-atmospheric pressure and temperatures in the range of 50°-120°C. Gas phase polymerization can be performed in a stirred or fluidized bed of catalyst and product particles in a pressure vessel adapted to permit the separation of product particles from unreacted gases. Ethylene, comonomer, hydrogen and an inert diluent gas such as nitrogen can be introduced or recirculated so as to maintain the particles at a temperatures of 500°C-120°C. Triethylaluminum may be added as needed as a scavenger of water, oxygen, and other impurities. Polymer product can be withdrawn continuously or semi-continuously at a rate such as to maintain a constant product inventory in the reactor. After polymerization and deactivation of the catalyst, the product polymer can be recovered by any suitable means. In commercial practice, the polymer product can be recovered directly from the gas phase reactor, freed of residual monomer with a nitrogen purge, and used without further deactivation or catalyst removal.

The VLDPE copolymers of the present invention can also be produced in accordance with a high pressure process by polymerization ethylene in combination with other monomers such as butene-1, hexene-1, octene-1, or 4-methylpentene-1 in the presence of the catalyst system comprising a cyclopentadienyl-transition metal compound and an alumoxane compound. In the high-pressure process, the polymerization temperature would generally be above 120°C but below the decomposition temperature of the polymer product and that the polymerization pressure would generally be above 500 bar (kg/cm²) although other temperature and pressure conditions may also be employed. In those situations wherein the molecular weight of the polymer product that would be produced at a given set of operating conditions is higher than desired, any of the techniques known in the art for control of molecular weight, such as the use of hydrogen or reactor temperature, may be used in producing copolymers employed in films of this invention.

The blend composition of the film base layer contains from 1 to 30 percent by weight of the VLDPE copolymer component, more preferably from 5 to 25 percent by weight of VLDPE, each based on the total weight of olefin polymer forming the base film layer.

The VLDPE copolymer which is applied to one or both surfaces of the base film layer to form a heat sealable layer may possess the same physical and chemical characteristics and may be made by the same processes as described above with respect to the VLDPE component of the base layer, except that it differs in composition from the copolymers contained in the base layer.

It has been found that the excellent results in terms of hot tack seal strength are achieved where the VLDPE component of a first layer which may be the base layer or heat sealable layer is a copolymer of ethylene and a C₃ to C₂₀ alpha-monoolefin and the VLDPE component of the other layer is a copolymer of ethylene and a C₆ to C₁₀ alpha-monoolefin which differs from the alpha-monoolefin comonomer present in the VLDPE of the first layer. In the more preferred embodiments of the invention, the C₆ to C₁₀ alpha-monoolefin-containing copolymer is used as the heat seal layer and the different C₃ to C₂₀ alpha-monoolefin-containing copolymer is used as a component in the base layer.

These materials provide an excellent balance of adhesion to the substrate base film without the need to employ an inter disposed anchor or tie layer such as polyvinylidene chloride or ethylene/vinyl acetate copolymers, and also possess the requisite high hot tack seal strength required for modern high speed packaging applications. Best results in terms of adhesion and hot tack seal strength are achieved with laminar structures wherein the VLDPE copolymer component of the base layer is an ethylene/butene-1 copolymer and the heat seal coating layer comprises a copolymer of ethylene with either hexene-1 or octene-1.

The percent hexane extractables for the low melting polymer VLDPE ingredients of the present invention are low enough to allow for applications in the food industry. Preferably, for food packaging applications, products having extractables 5 percent and under would be utilized.

The heat sealable films of the present invention may be manufactured using film fabrication technologies well known in the art. For example, the base film may be extruded into film using a flat die or blown extruded into film using a tubular die, and the heat seal layer formed thereon by solvent deposition, lamination or coextrusion techniques. A preferred method of manufacture is via coextrusion wherein a molten layer of the heat seal material is applied to the surface of an extruded cast film of the base layer. These laminar films may optionally be further oriented (either uniaxially or biaxially) using technologies well known to those skilled in the art.

The laminar film structure of the present invention may have an overall thickness in the range of from .00127 cm (0.5 mil) to 0.0127 cm (5 mil), with a preferred thickness of .0019 cm (0.75 mil) to 0.00635 cm (2.5 mil). The heat seal coating layer may constitute from 3 to 50% of this overall thickness, more preferably from 10 to 25% of the overall thickness, present on one or both sides of the base layer.

The VLDPE copolymer component of the base layer may also comprise a mixture of compositionally different VLDPE components within the scope of this invention. This is particularly the case because the VLDPE component of the base layer differs compositionally from the VLDPE component of the heat seal layer. Scrap trim recycled to the extruder and mixed with virgin polymer used to make the base layer will result in a base layer which contains a mixture of these VLDPE copolymers. Thus, in a preferred embodiment wherein the heat sealable layer comprises a VLDPE copolymer of ethylene and hexene-1 and the base layer contains a VLDPE copolymer of ethylene and butene-1, recycle of scrap trim back to the extruder would result in a base layer containing a mixture of the ethylene/butene-1 and ethylene/hexene-1 copolymers, along with the major polyolefin component of the base layer.

The polymer components used to fabricate the films of the present invention may also contain appropriate amounts of other additives normally included in such compositions. These include slip agents such as talc, antioxidants, fillers, dyes, pigments, radiation stabilizers and like additives.

The film products made in accordance with the present invention are useful in a wide variety of bag and pouch applications in which heat sealability is important. Bag and pouch forming include, but are not limited to horizontal form-fill-and-seal, and vertical form-fill-and-seal.

Some key properties of the final film are heat sealability and seal strength, hot tack strength, tensile strength, film rigidity, haze and gloss, low extractables, and abrasion resistance.

### EXAMPLE I

### Preparation of VLDPE-EB-1 (1.6 MI, Density of 0.8895, butene-1 Comonomer)

A catalyst is prepared by adding 5.1 liters of a 10% solution of trimethylaluminum in heptane into a dry and oxygen-free 1.67 l (two-gallon) reactor equipped with a mechanical stirrer. A sample of 800 g of undehydrated silica gel, containing 12.3% water, is slowly added into the reactor. After the addition is complete, the mixture is stirred at ambient temperature for one hour. A 20 g sample of di-(n-butylcyclopentadienyl) zirconium dichloride slurried in 30 liters of heptane is then added into the reactor and the mixture is allowed to react at ambient temperature for 30 minutes. The reactor is then heated to 65°C, while a nitrogen gas is purged through the reactor to remove the solvent. The nitrogen purging is stopped when the mixture in the reactor turns into a free-flowing powder.

The polymerization was conducted in a 40.64cm (16-inch) diameter fluidized gas phase reactor. Ethylene, butene-1 and nitrogen were fed continuously into the reactor to maintain a constant production rate. Product was periodically removed from the reactor to maintain the desired bed weight. The polymerization conditions are shown below.

| **Gas Phase Polymerization** | | |
|---|---|---|
| Temperature | (137 °F) | 58.3 °C |
| Total Pressure | (300 psia) | 2068.5kPa |
| Gas Velocity | (1.58ft/sec) | .482 m/sec |
| Catalyst Feed Rate | | 7.0 g/hr |
| Butene-1 Feed Rate | (5.3lb./hr) | 2.4 kg/hr Production |
| Rate | (26 lb/hr) | 11.8 kg/hr |
| The polymerized product had a Melt Index (dg/min.) of 1.60 and a Density (g/cm³) of 0.8895. | | |

### EXAMPLE 2

### Preparation of VLDPE-EB-2 (2.3 MI, Density of 0.8970, butene-1 comonomer)

The process of Example 1 was repeated as set forth therein except that the polymerization conditions were as shown below:

| **Gas Phase Polymerization** | | |
|---|---|---|
| Temperature | ( 129 °F) | 53.9°C |
| Total Pressure | (300 psia) | 2068.5 kPa |
| Gas Velocity | (1.59 ft/sec) | .485 m/sec |
| Catalyst Feed Rate | | 7.0 g/hr |
| Butene-1 Feed Rate | (2.9 lb./hr) | 1.32 kg/hr |
| Production Rate | (19 lb./hr) | 8.62 kg/hr |
| The polymerized product had a Melt Index (dg/min.) of 2.30 and a Density (g/cm³) of 0.8970. | | |

### EXAMPLE 3

### Preparation of VLDPE-EH (1.5 MI, Density of 0.905, hexene-1 comonomer)

The catalyst for polymerizing this ethylene copolymer was prepared as follows. A 800 gram quantity of silica gel and a 2700 ml. aliquot of methylalumoxane/toluene solution (10%) were placed in a 1.67 l (two-gallon) reactor and allowed to react at ambient temperature for one hour. A 21.6 gram quantity of di-(n-butylcyclopentadienyl) zirconium dichloride slurried in 300 ml of toluene was added into the reactor and the mixture was allowed to react at 65°C for 30 minutes. The reactor was then heated at 75°C while nitrogen gas was purged through the reactor to remove the solvent. The heating and nitrogen purging were stopped when the mixture in the reactor turned into a free-flowing powder.

The polymerization was conducted in a 40.6 cm (16-inch) diameter fluidized bed gas-phase reactor. Ethylene, hexene-1 and nitrogen were fed continuously into the reactor to maintain a constant production rate. Product was periodically removed from the reactor to maintain the desired bed weight. the polymerization conditions are shown below:

| **Gas Phase Polymerization** | | |
|---|---|---|
| Temperature | (158 °F) | 70°C |
| Total Pressure | (300 psia) | 2068.5kPa |
| Gas Velocity | (1.22 ft/sec) | .372 m/sec |
| Catalyst Feed Rate | | 3.0 g/hr |
| Hexene-1 Feed Rate | (3.1 lb./hr) | 1.41 kg/hr |
| Production Rate | (20 lb./hr) | 9.1 kg/hr |
| The polymerized product had a measured Melt Index (dg/min) of 1.5 and a density of 0.905 g/cm³. | | |

### EXAMPLES 4-12

A series of coextruded unoriented films were produced on a compounding extruder to produce AB type laminar films comprising a base film layer having an average thickness of .0041 cm (1.6 mil) and a single heat sealable coating layer having an average thickness of .0010 cm(.4 mils), i.e., the coating layer constituted about 20% of the thickness of the composite film. The composition of the base films was polypropylene, a propylene/ethylene random copolymer or a mixture of one of the above with a VLDPE copolymer of ethylene and butene-1 as prepared in Examples 1 and 2. The composition of the coating layer was either a VLDPE copolymer of ethylene and butene-1 or a VLDPE copolymer of ethylene and hexene-1 as prepared in accordance with Example 3. The composition of these various layers is identified in Table 1.

As used in Table 1, "PEC" is a crystallizable random copolymer of propylene having a MFI of 5.0 dg/min and containing about 5 wt % ethylene. It has a DSC peak melting temperature of about 132°C and is available commercially from Exxon Chemical Company as Escorene™ PD-9282. PP is a crystallizable polypropylene homopolymer having an MFI of about 2.3 dg/min and is available from Exxon Chemical Company under the designation Esorcene™ PP4092. The material identified as EB-1 is a VLDPE copolymer of ethylene and butene-1 as prepared in Example 1 having a MFI of 1.60 dg/min and a density of 0.8895 g/cm³. The material designated as EB-2 is a VLDPE prepared in Example 2 with a MFI of 2.30 dg/min and a density of 0.8970 g/cm³. The material designated EH is a VLDPE copolymer of ethylene and hexene-1 as prepared in Example 3 having an MFI of 1.5 dg/min and a density of 0.905 g/cm³.

The material designated EVA is a copolymer of ethylene and vinyl acetate (28% by weight vinyl acetate content) having an MFI of 3.1 dg/min.

Heat seal data and hot tack seal strengths of the various film formulations and configurations were evaluated using a Thellar Model EB Heat Sealer. Under this test, the heat seal sides of the coated films are brought into contact and seals are attempted to be formed at various temperatures from 60°C to 148.9°C in -12.22 °C (140°F to 300°F in 10°F) increments. The dwell time and pressures applied during sealing generally ranges from about 0.25 to 0.5 seconds and 448.2 kPa-551.6 kPa (65 psi-80 psi) respectively. The times and pressures employed are indicated in Table 1.

Test results are shown in Table 1. As is evident from the data in Table 1, film compositions within the scope of this invention (Examples 9 and 10) exhibited hot tack strengths in excess of 246.1g/cm (625 g/in) over a sealing temperature of 115.6°C to 132.2°C (240 to 270°F) and over 275.6g/cm (700g/in) at sealing temperatures of 115.5°C (240°F). This is in marked contrast to other formulations outside the scope of the present invention wherein the sealing layer and base layer each contain a VLDPE copolymer of ethylene and butene-1 or a copolymer of ethylene and vinyl acetate.

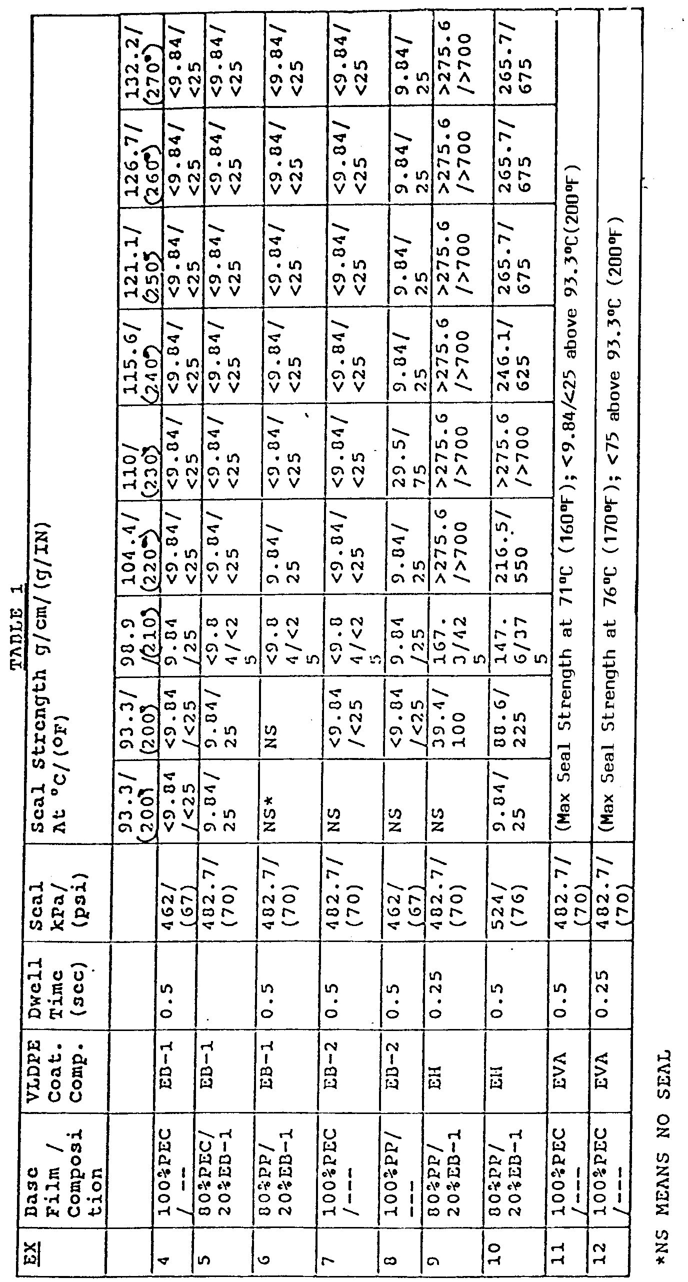

## Claims

1. A multiple layer heat sealable film comprising a base layer and a heat sealable layer superimposed on one or both sides of said base layer wherein:
i) the base layer comprises a blend of (a) an olefin polymer having a density in excess of 0.915 g/cm³ and (b) from 1 to 30 weight percent based on base layer polymer content of at least one copolymer (1) of ethylene and a C₃ to C₂₀ alpha monoolefin comonomer, said copolymer (1) having a density of from 0.88 to 0.915 g/cm³, a melt index of from 0.5 to 7.5 dg/min, a molecular weight distribution of no greater than 3.5 and a composition distribution breadth index equal to or greater than 70 percent;
ii) the heat sealable layer comprises a copolymer, (2) of ethylene and a C₃ to C₂₀ alpha-monoolefin comonomer, the copolymer (2) having a density of from 0.88 to 0.915 g/cm³, a melt index of from 0.5 to 7.5 dg/min, a molecular weight distribution of no greater than 3.5 and a composition distribution breadth index equal to or greater than 70 percent,
the film further characterized in that one of the copolymer (1) and (2) is a copolymer of ethylene and a C₆ to C₁₀ alpha-monoolefin comonomer which alpha-monoolefin comonomer differs from the alpha-monoolefin comonomer present in the others of the copolymers (1) and (2).

2. The film of claim 1 wherein copolymer (1) and/or copolymer (2) has a density of from 0.89 to 0.91.

3. The film of claim 1 or 2 wherein copolymer (1) and/or copolymer (2) has a molecular weight distribution of from 2.0 to 3.0 and/or a melt index of from 0.5 to 5.0

4. The film of any preceding claim wherein copolymer (1) and/or copolymer (2) has an essentially single melting point characteristic with a DSC peak melting point of from 60 to 115°C.

5. The film in accordance with any preceding claim having a thickness of from .00127 cm (0.5 mil) to .0127 cm (5.0 mils).

6. The film in accordance with any preceding claim wherein the heat sealable layer constitutes from 3 to 50% of the thickness of said film.

7. The film in accordance with any preceding claim wherein the ethylene copolymer present in each layer contains from 4 to 15 mole percent of said comonomer.

8. The film of claim 1 wherein the copolymer of ethylene and C₆ to C₁₀ alpha-monoolefin is present in the heat sealable layer.

9. The film in accordance with claim 6 wherein the heat sealable layer comprises a copolymer of ethylene and hexene-1 or ethylene and octene-1.

10. The film in accordance with any preceding claim wherein the base layer comprises a copolymer of ethylene and butene-1.

11. The film in accordance with any preceding claim wherein the olefin polymer component of the base layer comprises polypropylene, random copolymers of propylene with up to 15 mole % of a C₂ or C₄-C₁₂ alpha olefin, low density polyethylene, linear low density polyethylene, high density polyethylene, polybutene , crystallizable random copolymer of propylene and ethylene or a mixture or two or more thereof.

12. The film in accordance with any preceding claim wherein the or each of the ethylene copolymers (1) and (2) are prepared using a single site catalyst system.

13. A process for fabricating a heat sealed package comprising:
(a) providing a film according to any preceding claim;
(b) forming a shaped article from the film such that two heat sealable layers thereof are in contact; and
(c) applying to the contact region conditions of temperature and pressure sufficient to bond the heat sealable layers together, to form the desired package.

14. The process of claim 13 wherein the bonding conditions include a temperature of from 98.9°C to 132.2°C (210 to 270°F).

15. The process according to claim 13 or 14 which comprises a horizontal or vertical form-fill and seal process.

## Patentansprüche

1. Heißsiegelbare Mehrschichtfolie, die eine Grundschicht und eine an einer oder beiden Seiten der Grundschicht auf dieser liegende heißsiegelbare Schicht umfaßt, wobei
i) die Grundschicht eine Mischung aus (a) einem Olefinpolymer mit einer Dichte über 0,915 g/cm³ und (b) 1 bis 30 Gew.%, bezogen auf den Grundschichtpolymergehalt, von mindestens einem Copolymer (1) aus Ethylen und einem C₃- bis C₂₀-α-Monoolefincomonomer umfaßt, wobei das Copolymer (1) eine Dichte von 0,88 bis 0,915 g/cm³, einen Schmelzindex von 0,5 bis 7,5 dg/Min, eine Molekulargewichtsverteilung von nicht mehr als 3,5 und einen Breitenindex der Zusammensetzungsverteilung gleich oder größer als 70 % hat;
ii) die heißsiegelbare Schicht ein Copolymer (2) aus Ethylen und einem C₃- bis C₂₀-α-Monoolefincomonomer umfaßt, wobei das Comonomer (2) eine Dichte von 0,88 bis 0,915 g/cm³, einen Schmelzindex von 0,5 bis 7,5 dg/Min, eine Molekulargewichtsverteilung von nicht mehr als 3,5 und einen Breitenindex der Zusammensetzungsverteilung von größer als 70 % hat,
wobei die Folie außerdem dadurch gekennzeichnet ist, daß eines von Copolymer (1) und (2) ein Copolymer aus Ethylen und einem C₆- bis C₁₀-α-Monoolefincomonomer ist, wobei sich das α-Monoolefincomonomer von dem α-Monoolefincomonomer unterscheidet, welches in dem anderen der Copolymere (1) und (2) vorhanden ist.

2. Folie nach Anspruch 1, in der Copolymer (1) und/oder Copolymer (2) eine Dichte von 0,89 bis 0,91 haben bzw. hat.

3. Folie nach Anspruch 1 oder 2, in der Copolymer (1) und/oder Copolymer (2) eine Molekulargewichtsverteilung von 2,0 bis 3,0 und/oder einen Schmelzindex von 0,5 bis 5,0 haben bzw. hat.

4. Folie nach einem der vorhergehenden Ansprüche, bei der Copolymer (1) und/oder Copolymer (2) eine Schmelzpunktcharakteristik mit im wesentlichen einem Schmelzpunkt mit einem DSC-Peak von 60°C bis 115°C aufweisen bzw. aufweist.

5. Folie nach einem der vorhergehenden Ansprüche mit einer Dicke von 0,00127 cm (0,5 mil) bis 0,0127 cm (5,0 mil).

6. Folie nach einem der vorhergehenden Ansprüche, bei der die heißsiegelbare Schicht 3 bis 50 % der Dicke der Folie ausmacht.

7. Folie nach einem der vorhergehenden Ansprüche, bei der das in jeder Schicht vorhandene Ethylencopolymer 4 bis 15 % des Comonomers enthält.

8. Folie nach Anspruch 1, bei der das Copolymer aus Ethylen und C₆- bis C₁₀-α-Monoolefin in der heißsiegelbaren Schicht vorhanden ist.

9. Folie nach Anspruch 6, in der die heißsiegelbare Schicht ein Copolymer aus Ethylen und Hexen-1 oder Ethylen und Octen-1 umfaßt.

10. Folie nach einem der vorhergehenden Ansprüchen, bei der die Grundschicht ein Copolymer aus Ethylen und Buten-1 umfaßt.

11. Folie nach einem der vorhergehenden Ansprüche, bei der die Olefinpolymerkomponente der Grundschicht Polypropylen, statistische Copolymere aus Propylen mit bis zu 15 Mol.% C₂- oder C₄- bis C₁₂-α-Olefin, Polyethylen mit niedriger Dichte, lineares Polyethylen mit niedriger Dichte, Polyethylen mit hoher Dichte, Polybuten, kristallisierbares statistisches Copolymer aus Propylen und Ethylen oder eine Mischung aus zwei oder mehr derselben umfaßt.

12. Folie nach einem der vorhergehenden Ansprüche, bei der das oder jedes der Ethylencopolymere (1) und (2) unter Verwendung eines Katalysatorsystems mit einem einzigen Typ von katalytisch aktiver Stelle hergestellt sind.

13. Verfahren zur Herstellung einer heißsiegelbaren Verpackung, bei dem
(a) eine Folie nach einem der vorhergehenden Ansprüche bereitgestellt wird,
(b) ein geformter Gegenstand aus der Folie gebildet wird, so daß sich zwei heißsiegelbare Schichten der Folie in Kontakt miteinander befinden, und
(c) auf den Kontaktbereich Temperatur- und Druckbedingungen angewendet werden, die ausreichend sind, um die heißsiegelbaren Schichten unter Bildung der gewünschten Verpackung aneinander zu binden.

14. Verfahren nach Anspruch 13, bei dem die Bindungsbedingungen eine Temperatur von 98,9°C bis 132,2°C (210 bis 270°F) einschließen.

15. Verfahren nach Anspruch 13 oder 14, das ein horizontales oder vertikales Formgebungs-, Füll- und Versiegelungsverfahren (form-fill-and-seal) einschließt.

## Revendications

1. Film multicouche thermosoudable comprenant une couche de base et une couche thermosoudable en superposition sur une face ou les deux faces de ladite couche de base, dans lequel :
i) la couche de base comprend un mélange (a) d'un polymère oléfinique ayant une masse volumique supérieure à 0,915 g/cm³, et (b) de 1 à 30 % en poids, sur la base de la teneur en polymère de la couche de base, d'un copolymère (1) d'éthylène et d'un comonomère alpha-monooléfinique en C₃ à C₂₀, ledit copolymère (1) ayant une masse volumique de 0,88 à 0,915 g/cm³, un indice de fluidité de 0,5 à 7,5 dg/min, une distribution des poids moléculaires non supérieurs à 3,5 et un indice d'étendue de distribution de composition supérieur à 70 % ;
ii) la couche thermosoudable comprend un copolymère (2) d'éthylène et d'un comonomère alpha-monooléfinique en C₃ à C₂₀, le copolymère (2) ayant une masse volumique de 0,88 à 0,915 g/cm³, un indice de fluidité de 0,5 à 7,5 dg/min, une distribution des poids moléculaires non supérieure à 3,5 et un indice d'étendue de distribution de composition supérieur à 70 %,
film qui est caractérisé en outre en ce qu'un des copolymères (1) et (2) est un copolymère d'éthylène et d'un comonomère alpha-monooléfinique en C₆ à C₁₀, comonomère alpha-monooléfinique qui diffère du comonomère alpha-monooléfinique présent dans l'autre des copolymères (1) et (2).

2. Film suivant la revendication 1, dans lequel le copolymère (1) et/ou le copolymère (2) ont une masse volumique de 0,89 à 0,91 g/cm³.

3. Film suivant la revendication 1 ou 2, dans lequel le copolymère (1) et/ou le copolymère (2) ont une distribution des poids moléculaires de 2,0 à 3,0 et/ou un indice de fluidité de 0,5 à 5,0.

4. Film suivant l'une quelconque des revendications précédentes, dans lequel le copolymère (1) et/ou le copolymère (2) ont un point de fusion pratiquement unique caractéristique, avec un pic de point de fusion par calorimétrie différentielle de 60 à 115°C.

5. Film suivant l'une quelconque des revendications précédentes, ayant une épaisseur de 0,00127 cm (0,5 mil) à 0,0127 cm (5,0 mils).

6. Film suivant l'une quelconque des revendications précédentes, dans lequel la couche thermosoudable représente 3 à 50 % de l'épaisseur dudit film.

7. Film suivant l'une quelconque des revendications précédentes, dans lequel le copolymère d'éthylène présent dans 5 chaque couche contient 4 à 15 moles % du comonomère.

8. Film suivant la revendication 1, dans lequel le copolymère d'éthylène et d'une alpha-monooléfine en C₆ à C₁₀ est présent dans la couche thermosoudable.

9. Film suivant la revendication 6, dans lequel la couche thermosoudable comprend un copolymère d'éthylène et d'hexène-1 ou bien d'éthylène et d'octène-1.

10. Film suivant l'une quelconque des revendications précédentes, dans lequel la couche de base comprend un copolymère d'éthylène et de butène-1.

11. Film suivant l'une quelconque des revendications précédentes, dans lequel le polymère oléfinique présent dans la couche de base comprend le polypropylène, des copolymères statistiques de propylène avec jusqu'à 15 moles % d'une alpha-oléfine en C₂ ou en C₄-C₁₂, le polyéthylène basse densité, le polyéthylène linéaire basse densité, le polyéthylène haute densité, le polybutène, un copolymère statistique cristallisable de propylène et d'éthyléne ou un mélange de deux ou plus de deux d'entre eux.

12. Film suivant l'une quelconque des revendications précédentes, dans lequel le ou chaque copolymère des copolymères d'éthylène (1) et (2) est préparé en utilisant une formulation de catalyseur à un seul site.

13. Procédé de production d'un emballage thermosoudé, comprenant les étapes consistant :
(a) à prendre un film suivant l'une quelconque des revendications précédentes ;
(b) à former un article façonné à partir du film de telle sorte que deux couches thermosoudables de ce film soient en contact ; et
(c) à soumettre la région de contact à des conditions de température et de pression suffisantes pour lier l'une à l'autre les couches thermosoudables afin de former l'emballage désiré.

14. Procédé suivant la revendication 13, dans lequel les conditions de liaison comprennent une température de 98,9°C à 132,2°C (210 à 270°F).

15. Procédé suivant la revendication 13 ou 14, qui comprend un procédé horizontal ou vertical de remplissage de forme et soudage.
